# EUROPÄISCHE PATENTSCHRIFT

(11) **EP 0 530 456 B1**
(45) Veröffentlichungstag und Bekanntmachung des Hinweises auf die Patenterteilung: **10.01.1996**
(21) Anmeldenummer: 92110867.6
(22) Anmeldetag: 26.06.1992
(51) Int. Cl.: B64F 1/22

(54) **Schleppfahrzeug ohne Schleppstange zum Bugsieren von Flugzeugen**
Hauling device for towing an aircraft without a tow-bar
Tracteur pour remorquer un avion sans barre de remorquage

(30) Priorität: 04.09.1991 DE 4129407; 06.02.1992 DE 4203377
(43) Veröffentlichungstag der Anmeldung: 10.03.1993
(73) Patentinhaber: MAN Gutehoffnungshütte Aktiengesellschaft, D-46122 Oberhausen (DE)
(72) Erfinder: Franken, Wilhelm, Dipl.-Ing., W-4230 Wesel (DE); Kretschmann, Ernest, W-4200 Oberhausen 11 (DE); Weigardt, Gerhard, Dipl.-Ing., W-4200 Oberhausen 11 (DE); Goris, Heinrich, W-4231 Hamminkeln (DE); Michaelsen, Torsten Lars, Dipl.-Ing., W-5804 Herdecke (DE); Pohé, Dieter, Dipl.-Ing., W-4650 Gelsenkirchen (DE)

(56) Entgegenhaltungen:
- EP-A- 0 437 285
- EP-A- 0 437 286
- WO-A-90/08696
- WO-A-90/14266

## Beschreibung

Die Erfindung betrifft ein Schleppfahrzeug mit Räderfahrgestell und eigenem Fahrantrieb zum Bugsieren eines Flugzeuges ohne Schleppstange, wobei das Fahrzeug eine offene U-förmige Ausnehmung aufweist mit einer darin pendelnd angeordneten Einspann- und Hubvorrichtung für das Bugfahrwerk eines Flugzeuges. Ferner betrifft die Erfindung ein Verfahren zum Aufnehmen und Absetzen des Bugfahrwerks eines Flugzeuges auf das zuvor genannte Schleppfahrzeug.

Stangenlose Flugzeugschlepper zum Bugsieren von Flugzeugen für Flugzeugbewegungen auf Flugplätzen sind seit Mitte der 80er Jahre bekannt. Sie werden inzwischen sowohl für Operationen wie das Push-back, Schleppmanöver in Flugzeugwerften, Hallen und auch als Schleppfahrzeuge für längere Strecken innerhalb des Flughafengeländes benutzt.

Die von verschiedenen Herstellerfirmen konzipierten stangenlosen Flugzeugschlepper haben sich zwischenzeitlich zum Teil im Einsatz auf in- und ausländischen Flughäfen bewährt. Ein Nachteil dieser Fahrzeuge ist darin zu sehen, daß die Flughäfen oder die Fluggesellschaften für das Schleppen von Flugzeugen in der Regel zwei Flugzeugschleppertypen beschaffen müssen, da ein einziger Schleppertyp nicht alle Flugzeugtypen bedienen kann. Dies ist auf die unterschiedlichen Bugfahrwerkkonstruktionen der Flugzeuge zurückzuführen.

Die Flugzeugschlepper, die für Flugzeugbewegungen mit höheren Geschwindigkeiten auch über größere Entfernungen ausgelegt sind, bauen relativ groß und aufwendig. Die Anschaffungskosten sind entsprechend hoch, so daß derartige Flugzeugschlepper, sofern sie ausschließlich für Push-back-Betrieb verwendet werden sollen, unwirtschaftlich werden.

Bei dem Schleppfahrzeug zum Manövrieren von Flugzeugen nach der EP 0 437 285 A2 ohne Schleppstange, dessen Fahrgestell zwischen den Rädern einer Radachse einen gabelförmigen Aufnahmeraum aufweist, in dem eine mit einer Hubvorrichtung zusammenwirkende ein- und ausfahrbare Greif- und Einzugsvorrichtung angeordnet ist, mittels welcher das Bugrad des Flugzeugs erfaßbar und auf eine relativ zum Fahrgestell heb- und senkbare Schaufel ziehbar ist, dient eine einzige Schaufel zur Unterstützung des Bugrades im Bereich der Wirkungslinie der Bugradlast. Die Greif- und Einzugsvorrichtung ist mit der Schaufel achsfest verbunden. Zum Abschieben des Bugrades nach Beendigung des Manövriervorganges ist eine Ausstoßvorrichtung mit der Schaufel achsfest verbunden. Das Bugrad wird von den mit Rollen versehenen Greif- und Ausschubarmen am Vor- und Zurückrollen gehindert. Während der Kurvenfahrten kann die Schaufel, auf der das Bugrad steht, pendeln. Dies wird dadurch erreicht, daß die Schaufel oben über einen Dreieckslenker und unten über zwei Längslenker am Fahrgestell angelenkt ist.

Bei dem Schleppfahrzeug zum Manövrieren von Flugzeugen nach WO-A-9 008 696 ist über der Schaufel, die der Aufnahme des Bugrades des Flugzeuges dient, ein von oben gegen das Bugrad anlegbarer, mit einer Niederhaltekraft beaufschlagbarer Niederhalter angeordnet. Der Niederhalter weist im wesentlichen die Form eines Winkels oder Bogens auf. Es können aber auch zwei oder mehr Winkel nebeneinander und im wesentlichen parallel zueinander auf einer Schwenkachse angeordnet sein und gemeinsam den Niederhalter bilden.

Es ist Aufgabe der Erfindung, einen stangenlosen Flugzeugschlepper zu schaffen, der einfach in seiner Konstruktion ist, eine kurze Baufform aufweist, große Wendigkeit besitzt und dennoch einen sicheren Betrieb zuläßt. Dieser Flugzeugschlepper soll in seinen Anschaffungskosten im Vergleich zu den Kosten der bisher bekannten Schleppertypen niedrig sein. Für seinen vorgesehenen Einsatz in erster Linie als Push-back-Fahrzeug, d.h.vorwiegend für das Manövrieren von Flugzeugen vom Flugsteig zum Vorfeld, ist nur eine niedrige km/h-Leistung erforderlich. Außerdem soll dieser Schlepper in der Lage sein, Flugzeuge unterschiedlichen Bugraddurchmessers anzuheben und zu schleppen.

Diese Aufgaben löst die Erfindung in der Weise, wie es in den Patentansprüchen 1 und 4 angegeben ist.

Der erfindungsgemäße Flugzeugschlepper ist ein relativ kurzes und kompaktes Fahrzeug. Die Antriebsstärke ist verhältnismäßig niedrig, da für den Push-back-Betrieb nur Fahrgeschwindigkeiten bis max. 10 km/h erforderlich sind. Das Schleppfahrzeug arbeitet in jeder Beziehung wirtschaftlich, der Kraftstoffverbrauch ist selbstverständlich niedriger als bei den bekannten großen Flugzeugschleppern. Infolge der einfachen konstruktiven Ausführung ist das erfindungsgemäße Fahrzeug in den Anschaffungs- und Wartungskosten relativ sparsam.

Ein besonderer Vorteil des erfindungsgemäßen Flugzeugschleppers besteht darin, daß die hydraulisch betätigte Bugfahrwerkanhebevorrichtung, bestehend aus der Schwenk-Hub-Rampe mit der Einspannvorrichtung, d.h. den Teleskoparmen mit schwenkbaren Greifarmen und den Niederhaltern konstruktiv und funktionell intelligent kombiniert ist.

Der Fahrer des Flugzeugschleppers hat von der Fahrerkabine aus, die sich im hinteren Teil des Schleppers befindet, eine optimale Sicht auf die Einspann- und Hubvorrichtung und das Flugzeug. Der Flugzeugschlepper ist ausgelegt für beide Fahrtrichtungen.

Dadurch, daß die gesamte Einspann- und Hubvorrichtung des stangenlosen Schleppers in konstruktiv einfacher Weise über ein einziges Drehlager am Fahrgestell angelenkt ist, ist ein sicherer Ausgleich bei Kurvenfahrten gewährleistet.

Die starre Anordnung der Teleskoparme an der Schwenk-Hub-Rampe stellt eine besonders einfache und solide Konstruktion dar. Einfach und wartungsfreundlich ist z.B. auch die Konstruktion der schwenkbaren Greifarme, die nur starr an den Greifarmen befestigte Bugradberührungsflächen aufweisen und nicht Rollen wie die Greifarme bekannter stangenloser Flugzeugschlepper.

Der Abstand der Greifarme zum Boden bleibt bei abgesenkter Schwenk-Hub-Rampe konstant und die Greifarme sind in einer Höhe angeordnet, die Gewähr dafür gibt, daß einerseits ein exaktes Einspannen der Bugräder ermöglicht wird und es andererseits keinesfalls eine Kollision mit an einigen Flugzeug-Bugfahrwerken angeordneten Deflektoren geben kann.

Die Konstanthaltung der Einspannkräfte während des gesamten Aufnahme- und Hubvorganges der Flugzeug-Bugräder gewährleistet, daß die Bugräder während dieses Vorganges gegen Abrutschen aus der Klammerung zwischen den Greifarmen der Teleskoparme und der Schwenk-Hub-Rampe absolut gesichert ist.

In der Regel ist vorgesehen, daß die Teleskoparme mit den Greifarmen zum Einspannen der Flugzeug-Bugräder über hydraulische Teleskopzylinder betätigt werden. Die Betätigung der Teleskoparme kann jedoch alternativ auch mechanisch erfolgen, z.B. über Spindelantriebe. Pneumatisch angetriebene Teleskoparme kommen für diesen Anwendungsfall schon aus wirtschaftlichen Gründen nicht in Betracht.

Die Erfindung wird anhand von drei schematischen Zeichnungen näher erläutert.

Es zeigen:
- Fig.1: eine Draufsicht einer pendelnd aufgehängten Einspann- und Hubvorrichtung am Flugzeugschlepper,
- Fig. 2: eine Seitenansicht der Einspann- und Hubvorrichtung mit eingespannten, noch auf dem Boden stehenden Bugrädern und
- Fig. 3: eine Seitenansicht der Einspann- und Hubvorrichtung nach Fig. 2 mit vom Boden angehobenen Bugrädern.

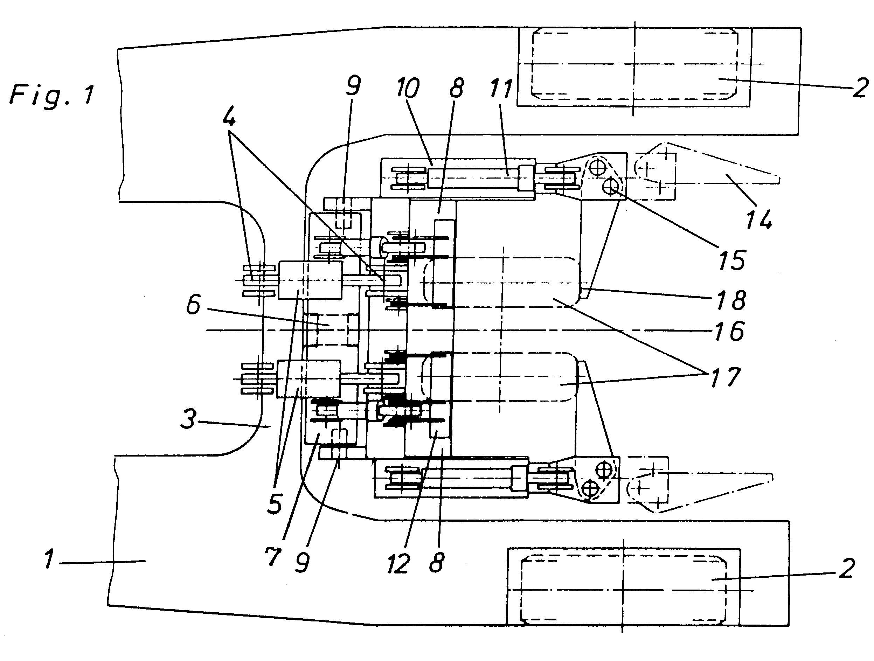

In der Draufsicht auf den vorderen Teil des Schleppfahrzeuges zum Bugsieren von Flugzeugen ohne Schleppstange gemäß Fig. 1 erkennt man die Räder (2) des Schleppfahrzeuges, das eine im Fahrgestellrahmen (1) in Fahrtrichtung offene U-förmige Ausnehmung (16) aufweist mit einer darin pendelnd gelagerten Einspann- und Hubvorrichtung.

Die Einspann- und Hubvorrichtung setzt sich aus der Schwenk-Hub-Rampe (8), den beidseitig starr angeordneten Teleskoparmen (10) mit Teleskopzylindern (11) und schwenkbaren Greifarmen (14), den Verriegelungen (15) sowie den Zylindern (13) mit den beiden Niederhaltern (12) für die Bugräder (17) zusammen.

Die Schwenk-Hub-Rampe (8), die im Verein mit den Greifarmen (14) die Bugräder (17) des Flugzeuges anheben soll, weist vor dem Anheben der Bugräder (17) Bodenfreiheit und eine Rampenneigung von ca. 45 ° auf. Die Teleskoparme (10) mit Teleskopzylindern (11) und aus- bzw. eingeschwenkten Greifarmen (14) befinden sich jederzeit innerhalb der U-förmigen Ausnehmung (16) des Fahrgestells (1) des Schleppfahrzeuges. Die Teleskoparme (10) sind starr an der Schwenk-Hub-Rampe (8) angeordnet.

In Fig. 1 erkennt man eine Quertraverse (3), die fest auf dem Fahrgestellrahmen (1) angeordnet ist. An den beiden Gelenklagern (4) sind die Hubzylinder (5) für die Schwenk-Hub-Rampe (8) angelenkt.

Die Gelenklager (4) gleichen den seitlichen Versatz der Hubzylinder (5) aus.

Die Schwenk-Hub-Rampe (8) ist mit dem Träger (7) auf dem Bolzen des Pendellagers (6) an der Quertraverse (3) gelagert und kann in den seitlich am Träger (7) angeordneten Schwenklagern (9) geschwenkt werden.

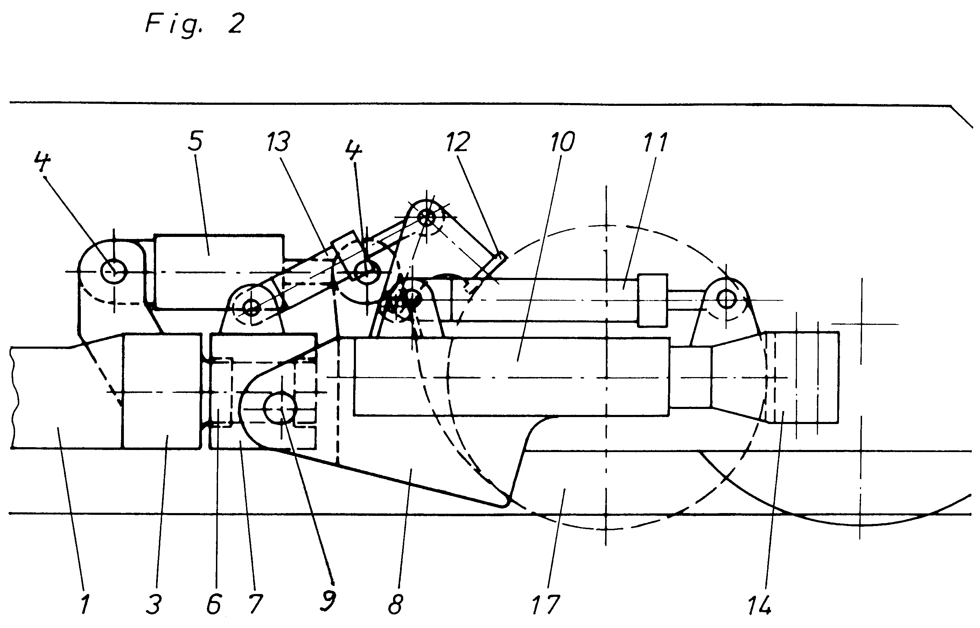

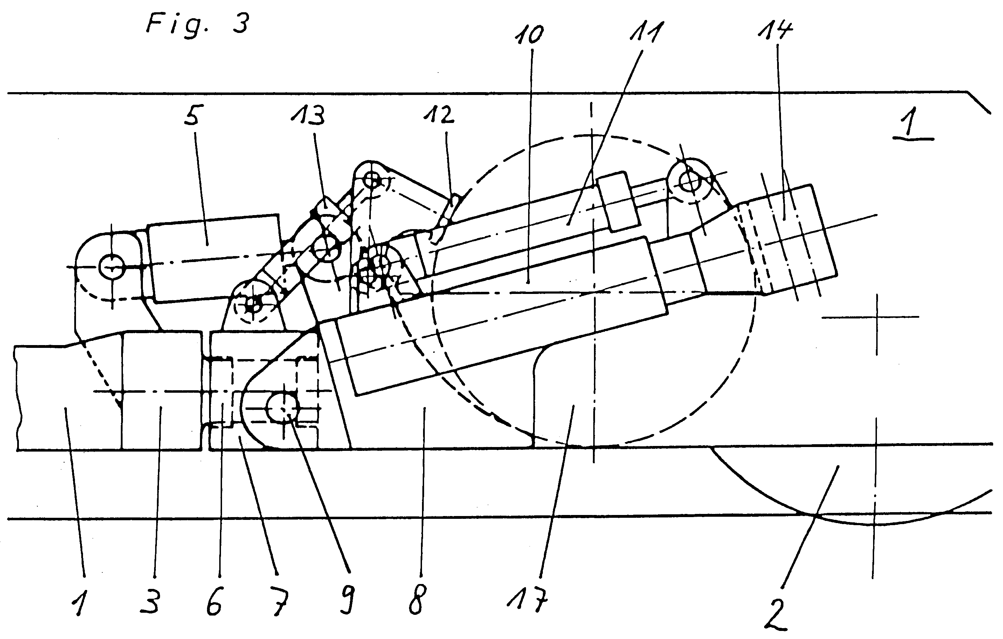

Wie aus den Figuren 2 und 3 ersichtlich, sind zu beiden Seiten der Schwenk-Hub-Rampe (8) die beiden Teleskoparme (10) starr angeordnet. Oberhalb der Teleskoparme (10) befinden sich die Teleskopzylinder (11) mit den schwenkbaren Greifarmen (14) an den Teleskopspitzen. Nach dem Einschwenken der Greifarme (14) lassen sich diese über eine Verriegelung (15) in dieser Stellung arretieren.

An der Schwenk-Hub-Rampe (8) sind ferner die Niederhalter (12) für die Bugräder (17) angeordnet, die über Zylinder (13) betätigt werden.

Während Fig. 2 die Einspann- und Hubvorrichtung in der Einspannphase der Bugräder (17) des Flugzeuges zeigt, geht aus Fig. 3 die Situation nach dem Einspannen und Anheben hervor.

Gemäß Fig. 2 befinden sich die Bugräder (17), noch auf dem Boden stehend, vor der der abgesenkten Schwenk-Hub-Rampe (8). Die Teleskoparme (10) mit den Teleskopzylindern (11) liegen horizontal, sind eingezogen und drücken die Bugräder (17) gegen die Schwenk-Hub-Rampe (8). Dabei sind die Greifarme (14) nach innen eingeschwenkt und spannen mit ihren Berührungsflächen (18) die Bugräder (17) ein. Die Niederhalter (12) sind ebenfalls gegen die Bugräder (17) gedrückt und verhindern auf diese Weise ein Ausweichen der Bugräder (17) nach oben.

Die Bugräder (17) von Flugzeugen können je nach Flugzeugtyp unterschiedliche Durchmesser aufweisen. Die erfindungsgemäße Einspann- und Hubvorrichtung ist so konzipiert, daß Bugradpaare von Verkehrsflugzeugen jeden Durchmessers angehoben werden können. Infolge der Ausbildung der Schwenk-Hub-Rampe (8) als eine Art schiefe Ebene bietet sich für Bugräder (17) unterschiedlichen Durchmessers immer eine ausreichende Anlagefläche. Die Teleskoparme (10) mit den Teleskopzylindern (11) und den Greifarmen (14) sowie die von Zylindern (13) betätigten Niederhalter (12) sind ebenfalls an unterschiedliche Bugraddurchmesser anpaßbar.

Das Maß zwischen der Schwenk-Hub-Rampe (8) und den Greifarmen (14) bei eingespannten Bugrädern (17) ist kleiner als der Durchmesser der Bugräder (17). Die Greifarme (14) befinden sich beim Einspannen der Bugräder (17), unabhängig von dem jeweiligen Durchmesser der Bugräder (17), immer in einer derartigen Höhenlage, daß sie nicht in Kollision geraten können mit an Bugfahrwerken einiger Flugzeugtypen angeordneten Deflektoren.

Während des gesamten Aufnahmevorganges, d.h. während des Zeitraumes zwischen der Situation gem. Fig. 1 und Fig. 2, liegt ständig ein konstanter hydraulischer Pumpendruck auf den Teleskopzylindern (11) der Teleskoparme (10). Da die Bugfahrwerk-Einspannkräfte während dieses Zeitraumes sich nicht ändern, ist eine optimale, aber auch das Bugfahrwerk des aufgenommenen Flugzeuges schonende Klammerung gewährleistet.

Sofern während des Aufnahme- und Hubvorganges eine Veränderung der Lage der Bugräder (17) auftritt, werden die Teleskoparme (10) mit ihren Greifarmen (14) gleichzeitig nachgeführt, so daß stets eine Einspannung mit den einmal vorgegebenen Einspannkräften erfolgt.

Die Seitenansicht gemäß Fig. 3 zeigt die erfindungsgemäße Einspann- und Hubvorrichtung mit angehobenen Bugrädern (17). Die von der Schwenk-Hub-Rampe, den Greifarmen (14) und den Niederhaltern (12) eingespannten Bugräder (17) sind mit Hilfe der Hubzylinder (5) nach oben geschwenkt und weisen somit die für das Schleppen des Flugzeuges erforderliche Bodenfreiheit auf.

Nach Beendigung des Schleppvorganges wird bei stehendem Schleppfahrzeug die Einspann- und Hubvorrichtung über die Hubzylinder (5) zurückgeschwenkt bis die Bugräder (17) des Flugzeuges Bodenberührung haben. Anschließend wird die Einspannung der Bugräder gelöst, d.h. die Greifarme (14) werden entriegelt ausgeschwenkt, die Teleskoparme (10) mit den Teleskopzylindern (11) nach vorne ausgefahren.

Nicht dargestellt ist in den Patentfiguren der Fahrstand des Schleppfahrzeuges, von dem aus die Bedienungsperson alle Funktionen des Fahrzeuges steuert.

### Bezugsziffernliste:

- 1: Fahrgestellrahmen
- 2: (vorderes) Schleppfahrzeugrad
- 3: Quertraverse
- 4: Gelenklager
- 5: Hubzylinder
- 6: Pendellager
- 7: Träger
- 8: Schwenk-Hub-Rampe
- 9: Schwenklager
- 10: Teleskoparm
- 11: Teleskopzylinder
- 12: Niederhalter
- 13: Zylinder für 12
- 14: Greifarm
- 15: Verriegelung
- 16: U-förmige Ausnehmung von 1
- 17: Bugrad
- 18: Berührungsfläche an 14

## Patentansprüche

1. Schleppfahrzeug mit Räderfahrgestell und eigenem Fahrantrieb zum Bugsieren eines Flugzeuges ohne Schleppstange, wobei das Fahrzeug eine offene U-förmige Ausnehmung aufweist mit einer darin pendelnd angeordneten Einspann- und Hubvorrichtung für das Bugfahrwerk eines Flugzeuges,
dadurch gekennzeichnet,
daß an einem Träger (7), welcher über ein einziges Pendellager (6) an einer Quertraverse (3) des Fahrgestellrahmens (1) gelagert ist, eine Schwenk-Hub-Rampe (8) mit einer Anlagefläche für die Bugräder (17) über Schwenklager (9) an dem Träger (7) angeordnet ist, mit an der Schwenk-Hub-Rampe (8) angelenkten Niederhaltern (12) und mit starr an der Schwenk-Hub-Rampe (8) befestigten zueinander parallelen Teleskoparmen (10) mit Teleskopzylindern (11) und an den Teleskopspitzen einschwenkbar angelenkten Greifarmen (14), wobei die Bugrad-Berührungsflächen (18) jeweils starr an den Greifarmen (14) befestigt sind,
so daß die Bugräder (17) zwischen den Greifarmen (14) und der als schiefe Ebene ausgestalteten Anlagefläche der Schwenk-Hub-Rampe (8) dadurch einspannbar sind, daß das Maß zwischen der Schwenk-Hub-Rampe (8) und den Greifarmen (14) bei eingespannten Bugrädern (17) kleiner als der Bugraddurchmesser ist.

2. Schleppfahrzeug nach Anspruch 1,
dadurch gekennzeichnet,
daß zur pendelnden Aufhängung der Einspann- und Hubvorrichtung, nämlich der Schwenk-Hub-Rampe (8), der Schwenklager (9), der starr an der SchwenkHub-Rampe (8) befestigten Teleskoparme (10) das Pendellager (6) am Träger (7) sowie Hubzylinder (5) mit Gelenklagern (4) zusammenwirken.

3. Schleppfahrzeug nach Anspruch 1,
dadurch gekennzeichnet,
daß die Teleskoparme (10) und Teleskopzylinder (11) bei der Aufnahme unterschiedlicher Flugzeugtypen einen konstanten Abstand zum Boden aufweisen.

4. Verfahren zum Aufnehmen und Absetzen des Bugfahrwerks eines Flugzeuges auf ein Schleppfahrzeug nach den Ansprüchen 1 - 3,
dadurch gekennzeichnet,
daß nach dem Heranfahren des Schleppfahrzeuges an das Bugfahrwerk des Flugzeuges zum Aufnehmen des Bugfahrwerks die Greifarme (14) an den ausgefahrenen Teleskoparmen (10) mit den Teleskopzylindern (11) eingeschwenkt, verriegelt, anschließend die Teleskoparme (10) soweit eingefahren werden, daß die starren Berührungsflächen (18) der Greifarme (14) die Bugräder (17) definiert gegenüber der als schiefe Ebene ausgestalteten Anlagefläche der Schwenk-Hub-Rampe (8) einspannen, so daß das Maß zwischen der Schwenk-Hub-Rampe (8) und den Greifarmen (14) bei eingespannten Bugrädern (17) kleiner als der Bugraddurchmesser ist, wobei die Niederhalter (12) durch die Bugräder (17) verdrängt werden und nach vollzogener Einspannung der Bugräder (17) die Niederhalter (12) gegen die Bugräder (17) gedrückt werden und die Einspann- und Hubvorrichtung (8, 10, 11, 12, 14) soweit aufwärts geschwenkt wird, daß auch beim Pendeln der Schwenk-Hub-Rampe (8) Bodenfreiheit besteht und zum Absetzen die Einspann- und Hubvorrichtung (8, 10, 11, 12, 14) soweit abwärts geschwenkt wird bis die Bugräder (17) Bodenberührung haben, anschließend die Einspannung der Bugräder (17) durch Ausfahren der Teleskoparme (10) und der Teleskopzylinder (11) gelöst wird, die Greifarme (14) entriegelt und ausgeschwenkt werden.

5. Verfahren nach Anspruch 4,
dadurch gekennzeichnet,
daß während des gesamten Aufnahme- und Hubvorganges der Flugzeug-Burgräder (17) die vorgegebenen Einspannkräfte in den Teleskoparmen (10) konstant gehalten werden und die Teleskoparme (10) mit ihren Greifarmen (14) während des Aufnahme- und Hubvorganges stets nachgeführt werden.

## Claims

1. A towing vehicle with a wheel support and its own travelling mechanism for towing an aeroplane without a tow bar, the vehicle having an open U-shaped housing with a device for clamping and lifting the front landing gear of an aeroplane swinging therein,
characterized in that
a pivoting lifting ramp (8) with an abutment surface for the nose wheels (17) is arranged, by means of swivel bearings (9), on a bearer (7) which is mounted, by means of a single self-aligning bearing (6), on a transverse member (3) of the support frame (1), with pressure pads (12) coupled to the pivoting lifting ramp (8) and with telescopic arms (10), parallel to one another, fixed rigidly on the pivoting lifting ramp (8) with telescopic cylinders (11) and gripping arms (14) articulated to the telescope tips, the nose wheel contact surfaces (18) being secured rigidly on respective gripping arms (14) so that the nose wheels (17) can be clamped between the gripping arms (14) and the abutment surface of the pivoting lifting ramp (8) formed as an inclined plane, owing to the fact that the dimension between the pivoting lifting ramp (8) and the gripping arms (14) when the nose wheels (17) are clamped is smaller than the diameter of the wheels.

2. Towing vehicle according to Claim 1,
characterized in that
the self-aligning bearing (6) on the bearer (7) as well as hydraulic jacks (5) with pivoting bearings (4) cooperate for the swinging suspension of the clamping and lifting device, that is to say, of the pivoting lifting ramp (8), of the swivel bearing (9), and of the telescopic arms fixed rigidly to the pivoting lifting ramp (8).

3. Towing vehicle according to Claim 1,
characterized in that
the telescopic arms (10) and the telescopic cylinders (11) have a constant ground clearance when lifting aeroplanes of different types.

4. Method of picking up on a towing vehicle and of putting down the front landing gear of an aeroplane according to Claims 1 - 3,
characterized in that
after the towing vehicle has been driven up to the front landing gear of the aeroplane in order to pick up the front landing gear, the gripping arms (14) on the extended telescopic arms (10) are pivoted inwardly by the telescopic cylinders 11 and locked, the telescopic arms (10) subsequently being drawn in to an extent such that the rigid contact surfaces (18) of the gripping arms (14) clamp the nose wheels (17) positively relative to the abutment surface of the pivoting lifting ramp (8) formed as an inclined plane so that the dimension between the pivoting lifting ramp (8) and the gripping arms (14) when the nose wheels (17) are clamped is smaller than the diameter of the nose wheels, the pressure pads (12) being displaced by the nose wheels (17) and, upon completion of the clamping of the nose wheels, the pressure pads (12) being pushed against the nose wheels (17) and the clamping and lifting device (8, 10, 11, 12, 14) being pivoted upwardly to an extent such that there is ground clearance even with swinging of pivoting lifting ramp (8) and, for the putting-down operation, the clamping and lifting device (8, 10, 11, 12, 14) is pivoted downwardly until the nose wheels (17) have ground contact, the clamping of the towing wheels (17) subsequently being released by the extension of the telescopic arms (10) and of telescopic cylinder (11), the gripping arms (14) being unlocked and pivoted outwardly.

5. Method according to Claim 4,
characterized in that
during the entire procedure for picking-up and lifting the nose wheels (17) of the aeroplane, the predetermined clamping forces in the telescopic arms (10) are kept constant and the telescopic arms (10) are always followed up by their gripping arms (14) during the picking-up and lifting procedure.

## Revendications

1. Tracteur à châssis de roulement, motorisé, pour remorquer un avion sans barre de remorquage, ce véhicule ayant une cavité ouverte en forme de U occupée par un dispositif de serrage et de levage monté oscillant pour recevoir le train de roulement du nez d'un avion,
caractérisé en ce que,
un support (7) monté sur une traverse (3) du châssis (1) par un seul palier oscillant (6) est muni d'une rampe de levage et de basculement (8) avec une surface d'appui pour les roues avant (17), étant monté sur le support (7) par des paliers pivotants (9), des serre-flancs (12) articulés à la rampe de levage et de pivotement (8) et des bras télescopiques (10), parallèles, fixés rigidement à la rampe de levage et de pivotement (8), des vérins télescopiques (11) et à l'extrémité des vérins des bras de préhension (14) articulés de manière à pouvoir basculer vers l'intérieur, les surfaces de contact (18) pour les roues avant étant fixées respectivement de manière rigide aux bras de préhension (14), pour que les roues avant (17) puissent être serrées entre les bras de préhension (14) et la surface d'appui de la rampe de levage et de pivotement (8) en forme de plan incliné et la dimension entre la rampe de levage et de pivotement (8) et les bras de préhension (14), lorsque les roues avant (17) sont serrées, est inférieure au diamètre des roues avant.

2. Tracteur selon la revendication 1,
caractérisé en ce que,
pour la suspension pendulaire du dispositif de levage et de serrage, c'est-à-dire de la rampe de levage et de pivotement (8), le palier pivotant (9), le bras télescopique (10) fixé rigidement à la rampe de levage et de pivotement (8), le palier oscillant (6) du support (7) ainsi que le vérin de levage (5) coopèrent avec les paliers articulés (4).

3. Tracteur selon la revendication 1,
caractérisé en ce que,
les bras télescopiques (10) et les vérins télescopiques (11) sont à une distance constante du sol pour recevoir différents types d'avions.

4. Procédé de réception et de dépôt du train de roulement avant d'un avion par un tracteur selon les revendications 1 à 3,
caractérisé en ce que,
après avoir conduit le tracteur contre le train de roulement avant de l'avion pour recevoir son train de roulement, on applique les bras de préhension (14) des bras télescopiques (10) avec les vérins télescopiques (11) et on verrouille, puis on rentre les bras télescopiques (10) jusqu'à ce que les surfaces de contact rigides (18) des bras de préhension (14) serrent les roues avant (17) de manière dé terminée par rapport à la surface d'appui en forme de plan incliné de la rampe de levage et de pivotement (8), pour que la distance comprise entre la rampe de levage et de pivotement (8) et les bras de préhension (14), les roues avant (17) étant serrées, soit inférieure au diamètre des roues avant, les serre-flancs (12) étant repoussés par les roues avant (17) et une fois le serrage des roues avant (17), terminé, les serre-flancs (12) sont pressés contre les roues avant (17) et le dispositif de serrage et de levage (8, 10, 11, 12, 14) est relevé par basculement pour avoir une garde au sol même si la rampe de levage et de pivotement (8) effectue des mouvements oscillants, et pour abaisser le dispositif de serrage et de levage (8, 10, 11, 12, 14) on le bascule vers le bas jusqu'à ce que les roues avant (17) soient en contact avec le sol, puis, on desserre les roues avant (17) par déploiement des bras télescopiques (10) et des vérins télescopiques (11), on déverrouille les bras de préhension (14) et on les dégage.

5. Procédé selon la revendication 4,
caractérisé en ce que,
pendant toute la phase de réception et de levage des roues avant (17) de l'avion, on maintient constantes les forces de serrage prédéterninées dans les bras télescopiques (10) et pendant la phase de réception et de levage on asservit toujours les bras télescopiques (10) à leurs bras de préhension (14).
